# EUROPÄISCHE PATENTSCHRIFT

(11) **EP 0 632 110 B1**
(45) Veröffentlichungstag und Bekanntmachung des Hinweises auf die Patenterteilung: **11.09.1996**
(21) Anmeldenummer: 94109703.2
(22) Anmeldetag: 23.06.1994
(51) Int. Cl.: C09C 1/00, C09D 7/12, C09D 11/00, C08K 9/02, C03C 25/02, C04B 33/14, A61K 7/00

(54) **Bismutvanadathaltige Glanzpigmente**
Brilliant pigments containing bismuth vanadate
Pigments brillants contenant du vanadate de bismuth

(30) Priorität: 02.07.1993 DE 4322020
(43) Veröffentlichungstag der Anmeldung: 04.01.1995
(73) Patentinhaber: BASF Aktiengesellschaft, 67063 Ludwigshafen (DE)
(72) Erfinder: Schmidt, Raimund, Dr., D-67435 Neustadt (DE); Mronga, Norbert, Dr., D-69221 Dossenheim (DE); Ochmann, Harald, Dr., D-67125 Dannstadt-Schauernheim (DE); Schwidetzky, Christoph, Dr., D-67454 Hassloch (DE)

(56) Entgegenhaltungen:
- DE-A- 4 104 310
- US-A- 4 063 956

## Beschreibung

Die vorliegende Erfindung betrifft neue Glanzpigmente auf Basis beschichteter, plättchenförmiger Substrate, die eine bismutvanadathaltige Schicht enthalten.

Außerdem betrifft die Erfindung die Herstellung dieser Glanzpigmente sowie ihre Verwendung zum Einfärben von Lacken, Druckfarben, Kunststoffen, Gläsern, keramischen Produkten und Zubereitungen der dekorativen Kosmetik.

Glanz- oder Effektpigmente werden in zunehmendem Maße in vielen Bereichen der Technik eingesetzt, beispielsweise in Automobillakken, in der dekorativen Beschichtung, der Kunststoffeinfärbung, in Anstrich-, Druck-, insbesondere Sicherheitsfarben sowie in der Kosmetik.

Ihre optische Wirkung beruht auf der gerichteten Reflexion an überwiegend flächig ausgebildeten, ausgerichteten metallischen oder stark lichtbrechenden Pigmentteilchen. Je nach Art der Pigmentteilchen spricht man auch von Metalleffektpigmenten (z.B. Aluminium-, Zink- oder Kupferflakes) oder Perlglanzpigmenten (z.B. hochbrechende, transparente, plättchenförmige Metalloxide wie Bismutoxychlorid oder mit hochbrechenden Metalloxiden wie Titan- oder Zirkondioxid beschichtete, silikatische Substrate wie Muskovit, Phlogopit, Biotit, Talkum oder Glas).

Daneben gibt es eine Reihe von Kombinationspigmenten, bei denen die oben genannten Pigmente mit weiteren, insbesondere farbigen, hochbrechenden Metalloxiden wie Chromoxid und vor allem Eisenoxid beschichtet sind. Durch Interferenz-, Reflexions- und Absorptionsphänomene ergibt sich hier in Abhängigkeit von der Dicke der Metalloxidschicht eine Vielzahl von winkelabhängigen Farb- und Helligkeitseindrücken. Man kann diese Pigmente daher auch Interferenzabsorptionspigmente und bei metallischem Substrat auch Interferenzreflexionspigmente nennen.

Mit den bekannten Glanzpigmenten ist insbesondere der rote bis goldene Farbtonbereich gut abgedeckt, jedoch gibt es keine rein gelben Glanzpigmente mit hoher Farbstärke.

Die handelsüblichen gelben Glanzpigmente sind alle mehr oder weniger rotstichig, was in der Regel auf den Einbau von Fe(III)-Verbindungen zurückzuführen ist. Zwar können z.B. mit Titandioxid beschichtete Glimmer im gelben Farbtonbereich sehr reine Interferenzfarben aufweisen, dabei handelt es sich jedoch um pastellartige Farbtöne mit geringer Farbstärke. Eine Verstärkung der Körperfarbe durch den Einbau nichtselektiv absorbierender Schichten, wie beispielsweise in der DE-A 41 41 069 beschrieben, ist zwar möglich, jedoch zeigen die im Lack applizierten Pigmente beim Abkippen eine Abschwächung der Farbstärke, so daß ein unbunter Farbeindruck resultiert.

Der Erfindung lag daher die Aufgabe zugrunde, farbstarke Glanzpigmente im gelben Farbtonbereich bereitzustellen, die die genannten Nachteile nicht aufweisen und die vorteilhaft für die gewünschten Verwendungszwecke eingesetzt werden können.

Demgemäß wurde Glanzpigmente auf Basis beschichteter, plättchenförmiger Substrate gefunden, die eine bismutvanadathaltige Schicht enthalten.

Weiterhin wurde ein Verfahren zur Herstellung dieser Glanzpigmente gefunden, welches dadurch gekennzeichnet ist, daß man Bismutvanadat in Gegenwart der zu belegenden Substratteilchen, einer Base und gegebenenfalls gelöster Phosphate, Borate und/oder hydrolysierbarer Metallsalze mit einer alkalischen Vanadatlösung aus einer sauren Bismutsalzlösung ausfällt und die so erhaltenen, belegten Substratteilchen abfiltriert, wäscht und trocknet.

Außerdem wurde die Verwendung dieser Glanzpigmente zur Einfärbung von Lacken, Druckfarben, Kunststoffen, Gläsern, keramischen Produkten und Zubereitungen der dekorativen Kosmetik gefunden.

Als Ausgangsmaterialien für die erfindungsgemäßen Glanzpigmente eignen sich prinzipiell alle plättchenförmigen Substrate, die unter den Bedingungen des erfindungsgemäßen Herstellverfahrens stabil sind.

Besonders geeignet sind silikatische Substrate wie helle oder weiße Glimmer, wobei Schuppen von vorzugsweise naß vermahlenem Muskovit besonders bevorzugt sind. Selbstverständlich können auch andere natürliche Glimmer wie Phlogopit und Biotit, künstliche Glimmer, Talk- und Glasschuppen verwendet werden.

Die silikatischen Substratteilchen sind vorzugsweise in einer ersten Schicht mit hochbrechenden Metalloxiden wie Titan-, Zirkon-, Zinn-, Aluminium-, Silicium-, Zinkoxid, Bismutoxychlorid oder deren Mischungen belegt. Bevorzugt ist dabei eine Beschichtung mit Zirkondioxid und besonders bevorzugt mit Titandioxid.

Diese einfach beschichteten Pigmente sind allgemein bekannt und beispielsweise in den DE-C 14 67 468, EP-A 45 851, DE-A 32 37 264 und DE-A 36 17 430 beschrieben. Metalloxidbeschichtete Glimmerplättchen sind auch unter dem Namen Iriodin® (E. Merck, Darmstadt), Flonac® (Kemira Oy, Pori, Finnland) oder Mearlin® (Mearl Corporation, New York) im Handel.

Weitere geeignete Substrate sind plättchenförmige Kristalle von Metalloxiden wie sie z.B. von Bismutoxychlorid und Eisen(III)oxid bekannt sind.

Denkbar ist auch die Verwendung von plättchenförmigen Metallpigmenten, die unter den Beschichtungsbedingungen stabil sind.

In Frage kommen z.B. Aluminiumflakes, die bereits mit einer schützenden Oxidschicht insbesondere aus Aluminium-, Titan- oder Eisenoxid belegt sind. Bevorzugt sind dabei titandioxid- und eisenoxidbeschichtete Aluminiumflakes, die beispielsweise nach den Angaben in der US-A 4 978 394 und der EP-A 33 457 durch Gasphasenzersetzung von Titantetrachlorid bzw. Eisenpentacarbonyl in Gegenwart der Aluminiumflakes herzustellen sind. Die Aluminiumflakes selbst können aus Aluminiumfolie herausgestanzt oder nach bekannten Verdüsungs- und Mahltechniken hergestellt werden und sind auch im Handel erhältlich (z.B. Firma Eckart, Fürth und Alcan-Toyo, Maisons-Laffitte).

Weiterhin kommen auch Stahlflakes in Betracht, die nach ähnlichen Techniken hergestellt werden können und unter den Beschichtungsbedingungen stabil sind.

Die Größe der Substratteilchen ist an sich nicht kritisch und kann auf den jeweiligen Anwendungszweck abgestimmt werden. In der Regel haben die Teilchen größte Durchmesser von etwa 1 bis 200 µm, insbesondere etwa 5 bis 100 µm, und Dicken von etwa 0,1 bis 5 µm, insbesondere etwa 0,5 µm.

Bei den erfindungsgemäßen Glanzpigmenten sind die Substratteilchen, die entweder mit hochbrechendem Metalloxid beschichtet oder unbeschichtet sind, mit einer bismutvanadathaltigen Schicht belegt.

Die erfindungsgemäßen Glanzpigmente verbinden auf diese Weise die hohe Farbstärke des als reines Gelbpigment bekannten Absorptionspigments Bismutvanadat mit dem hohen Glanz des als Interferenzpigment dienenden Substrats. Neben dem deutlich erhöhten Glanz zeichnen sich die erfindungsgemäßen Glanzpigmente auch durch verbesserte anwendungstechnische Eigenschaften wie die leichtere Dispergierbarkeit in Lacken gegenüber den reinen Bismutvanadatpigmenten aus.

Die erfindungsgemäßen bismutvanadathaltigen Schichten können wie die reinen Bismutvanadatpigmente sowohl mit Anionen als auch mit Kationen dotiert sein. Beispiele für bevorzugte anionische Dotierungsmittel sind Borate, Perborate, Sulfate, Silikate und Phosphate. Als bevorzugte kationische Dotierungsmittel seien beispielsweise Erdalkalikationen wie Magnesium, Calcium und Strontium, Zink und Aluminium genannt. Besonders bevorzugte erfindungsgemäße bismutvanadathaltige Schichten enthalten Phosphat und Borat als Dotierungsmittel. Geeignete Dotierungsmengen sind dabei in der Regel 0,005 bis 10 Gew.-%, vorzugsweise 0,01 bis 4 Gew.-% Dotierungsmittel, bezogen auf das beschichtete Pigment.

Bei der erfindungsgemäßen Herstellung der neuen Glanzpigmente durch Ausfällen von Bismutvanadat aus einer Bismutsalzlösung mit Vanadat in Gegenwart der Substratteilchen werden auf der Substratoberfläche festhaftende bismutvanadathaltige Schichten erhalten, die in der Regel aus bismutvanadathaltigen Kristalliten der Größenordnung von 0,01 bis 5 µm, bevorzugt 0,5 bis 3 µm, aufgebaut sind. Je nach der Menge des ausgefällten Bismutvanadats sind diese Kristallite mehr oder weniger dicht gepackt.

Werden filmartige Schichten aus dicht gepackten, kleinen (10 bis 100 nm) Kristalliten abgeschieden, so können diese zur Interferenz des beschichteten Glanzpigmentes beitragen.

In der Regel werden die aufgefällten, bismutvanadathaltigen Kristallite jedoch zu groß sein, um eine interferenzfähige Schicht zu ergeben.

In Abhängigkeit von der Interferenzfarbe des Substrats werden farbstarke, rein gelbe Pigmente (z.B. Substrat mit goldener oder silberner Interferenzfarbe) oder two-tone-Pigmente, die gelbe Körperfarbe und die Interferenzfarbe des Substrats (z.B. Substrat mit roter oder blauer Interferenzfarbe) zeigen, erhalten.

Wird als Substrat unbeschichteter Glimmer, z.B. gemahlener Muskovit, verwendet, so erhält man durch Aufbringung einer dünnen bismutvanadathaltigen Schicht glänzende, gelbe Pigmente, die in applizierter Form einen schwachen Helligkeitsflop zeigen. Haben die aufgebrachten Bismutvanadatkristallite eine Größe von etwa 0,5 bis 3 µm, so sind keine Interferenzeffekte zu beobachten. Bei unverändert guten koloristischen Eigenschaften sind diese Glanzpigmente in Lacken wesentlich leichter dispergierbar als die klassischen Bismutvanadatpigmente.

Alternativ kann die erfindungsgemäße bismutvanadathaltige Schicht auch aus einer Metalloxidmatrix, insbesondere aus Silicium- und/oder Titanoxid, bestehen, in die Bismutvanadatteilchen eingebaut sind.

Mit einer solchen bismutvanadathaltigen Schicht belegte Glanzpigmente können hergestellt werden, indem fertig ausgebildete Bismutvanadatpigmente bei der Fällung des Metallhydroxids in einer wäßrigen Suspension der Substratteilchen zugegen sind und auf die Substratoberfläche mitaufgefällt werden.

Zweckmäßigerweise legt man hierzu eine wäßrige Suspension der Substratteilchen vor, gibt das in Wasser dispergierte Bismutvanadatpigment zu und dosiert eine wäßrige Metallsalzlösung (z.B. Titantetrachlorid- oder Natronwasserglaslösung) zu. Gleichzeitig gibt man eine Base bzw. Säure so zu, daß der pH-Wert der Mischung in einem Bereich gehalten wird, in dem die Fällung des Metallhydroxids stattfindet. Bei der anschließenden Trocknung des abgetrennten und gewaschenen Pigments werden die aufgefällten Hydroxide in die entsprechenden Oxide bzw. Oxidhydrate überführt.

In der Regel werden die erstgenannten bismutvanadathaltigen Schichten, bei denen das Bismutvanadat in situ gebildet und aufgefällt wird, vorzuziehen sein.

Glanzpigmente, die mit diesen bismutvanadathaltigen Schichten belegt sind, können vorteilhaft nach dem erfindungsgemäßen Verfahren erhalten werden, indem man Bismutvanadat in Gegenwart der zu belegenden Substratteilchen, einer Base und gegebenenfalls gelöster Salze der obengenannten Dotierungsmittel mit einer alkalischen Vanadatlösung aus einer sauren Bismutsalzlösung ausfällt und die belegten Substratteilchen anschließend abfiltriert, wäscht und trocknet.

Als Bismutsalz eignet sich hierfür insbesondere Bismutnitrat, geeignete Vanadate sind zum Beispiel Ammonium- und Alkali-, vor allem Natrium- und Kalium-ortho- und -metavanadat.

Beispiele für lösliche Salze der Dotierungsmittel sind neben den entsprechenden Erdalkalisalzen vor allem die Alkaliphosphate, -hydrogenphosphate, -borate, -perborate, -sulfate und -silikate insbesondere die Natrium- und Kaliumphosphate, -hydrogenphosphate, -borate, -perborate, -sulfate und -silikate.

Vorzugsweise geht man beim erfindungsgemäßen Herstellungsverfahren so vor, daß man die alkalische Vanadatlösung, die gleichzeitig auch gelöstes Phosphat und gewünschtenfalls Borat, Perborat, Silikat und/oder Sulfat enthält, zu der sauren Bismutsalzlösung, in der die Substratteilchen suspendiert sind, gibt, mit einer Base (z.B. Natronlauge) den pH-Wert der Mischung auf 2 bis 6, bevorzugt 2,5 bis 5, einstellt, die Mischung ungefähr 1 h bei diesem pH-Wert rührt, den pH-Wert dann auf 5 bis 8, vorzugsweise 5,5 bis 7, erhöht, dann die Mischung unter Konstanthaltung des pH-Wertes durch weitere Basenzugabe auf Rückflußtemperatur erhitzt, anschließend ohne weitere Basenzugabe 0,5 bis 5 h weiter erhitzt und das Pigment heiß abfiltriert.

Das Phosphat wird üblicherweise in einer Menge von 0,5 bis 50, bevorzugt 1 bis 25 mol.-%, bezogen auf die Bismutkonzentration, eingesetzt.

Geeignete Mengen der weiteren Dotierungsmittel sind in der Regel 1 bis 25, vorzugsweise 2 bis 15 mol.-%, bezogen auf die Bismutkonzentration.

Nach einer Variante des erfindungsgemäßen Verfahrens kann man auch so vorgehen, daß man die Bismutsalzlösung zu der Vanadatlösung gibt, den pH-Wert der Mischung durch Basenzugabe auf 3 bis 6,5 einstellt und durch weitere Basenzugabe während des Erhitzens auf bis zu 100°C konstant hält, bis er nicht mehr absinkt, und das Pigment nach 0,5 bis 5 h isoliert und 0,5 bis 5 h bei 300 bis 600°C tempert.

Gewünschtenfalls können die erfindungsgemäßen Glanzpigmente noch eine äußere, im wesentlichen farblose Schicht aus Metalloxiden, -oxidhydraten, Metallsilikaten oder Metallphosphaten enthalten, die eine zusätzliche Verbesserung der anwendungstechnischen Eigenschaften, z.B. der Lichtechtheit, der thermischen Stabilität oder der Stabilität gegenüber Säuren und reduzierenden Agenzien, bewirken kann. Bevorzugt besteht eine solche Schicht aus Aluminiumhydroxid und/oder Calcium- oder Zinkphosphat.

Diese Schichten können, wie beispielsweise in der US-A 4 063 956 beschrieben, durch Auffällen eines Metallphosphates (z.B. Ca₃(PO₄)₂) auf die in wäßriger Suspension vorliegenden Pigmentteilchen aufgebracht werden.

Die erfindungsgemäßen Glanzpigmente zeichnen sich durch gute anwendungstechnische Eigenschaften, insbesondere ihren reinen, gelben Farbton, ihre Farbstärke und ihren Glanz aus. Sie sind leicht in den Anwendungsmedien, insbesondere auch Lacken, dispergierbar und eignen sich daher vorteilhaft für viele Zwecke, beispielsweise die Einfärbung von Lacken, Druckfarben, Kunststoffen, Gläsern, keramischen Produkten und Zubereitungen der dekorativen Kosmetik.

### Beispiele

Zu einer Suspension von 40 g des Glimmerpigments X in a₁ g einer 11 gew.-%igen, salpetersauren, wäßrigen Bismutnitratlösung (berechnet als Bismut) wurde rasch unter Rühren eine alkalische wäßrige Lösung, die b₁ g Natriummetavanadatlösung (6,86 Gew.-% Vanadin), b₂ g Trinatriumphosphatdodecahydrat und b₃ g Natriumperborattetrahydrat gegeben. Der pH-Wert der Mischung betrug 0,1 bis 1.

Danach wurde mit 30 gew.-%iger Natronlauge der pH-Wert der Suspension auf 3,5 eingestellt. Die Suspension wurde dann 1 h bei Raumtemperatur gerührt, wobei der pH-Wert durch Zudosierung von 4 gew.-%iger Natronlauge zwischen 3,4 und 3,7 gehalten wurde.

Anschließend wurde der pH-Wert ebenfalls durch Zugabe der 4 gew.-%igen Natronlauge, auf 6,0 erhöht und während des Erhitzens auf Rückflußtemperatur durch weitere Basenzugabe konstant gehalten.

Nach Erreichen der Rückflußtemperatur begann der pH-Wert zu steigen, und die Suspension verfärbte sich nach gelb.

Nach zweistündigem Erhitzen unter Rückfluß wurde das Pigment heiß abfiltriert, salzfrei gewaschen und bei 80°C im Vakuum getrocknet.

Weitere Angaben zu diesen Versuchen sowie deren Ergebnisse sind in der folgenden Tabelle zusammengestellt.

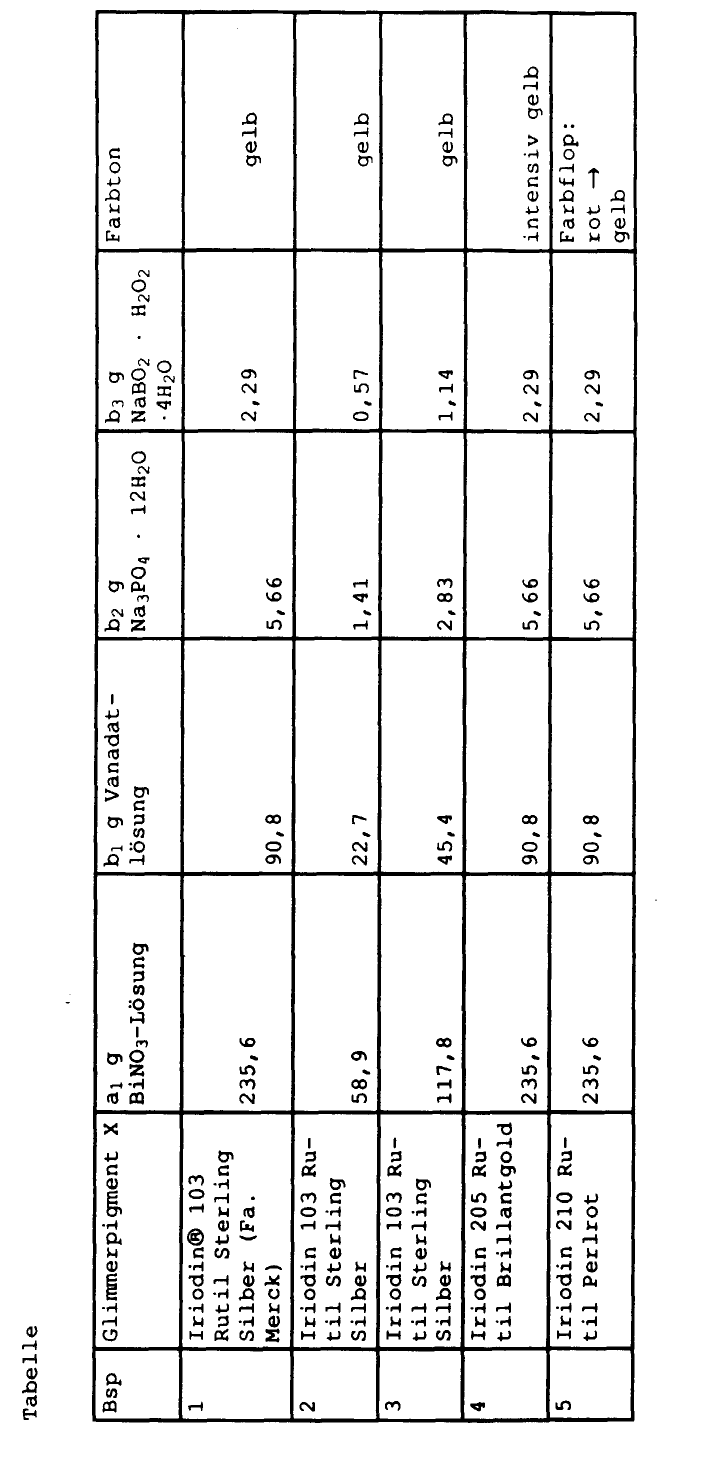

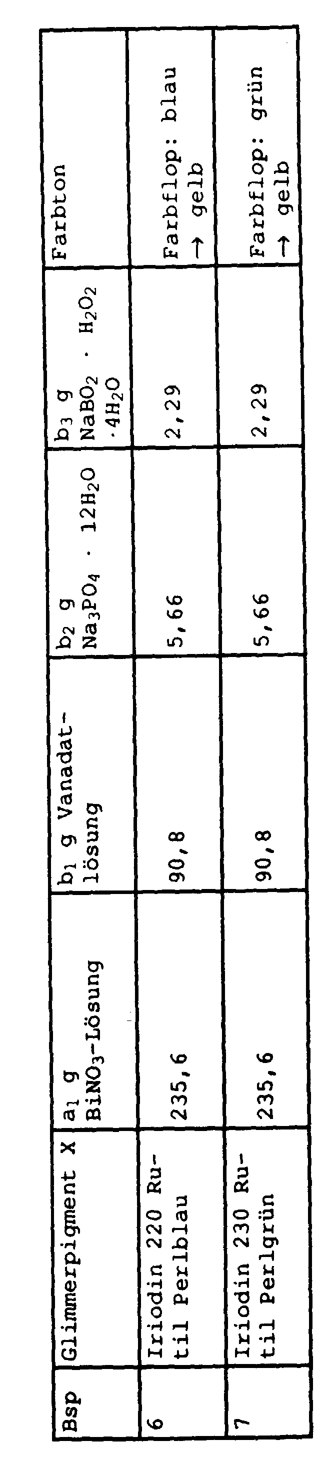

## Patentansprüche

1. Glanzpigmente auf Basis beschichteter, plättchenförmiger Substrate, die eine bismutvanadathaltige Schicht enthalten.

2. Glanzpigmente nach Anspruch 1, bei denen die bismutvanadathaltige Schicht Phosphat, Borat, Sulfat, Silikat und/oder Metalloxid oder Metalloxidhydrat enthält.

3. Glanzpigmente nach Anspruch 1 oder 2, bei denen die bismutvanadathaltige Schicht Erdalkali-, Silicium- und/oder Titanoxid oder -oxidhydrat enthält.

4. Glanzpigmente nach den Ansprüchen 1 bis 3, die als äußere Schicht eine im wesentlichen farblose metalloxid-, metallsilikat- und/oder metallphosphathaltige Schicht enthalten.

5. Glanzpigmente nach den Ansprüchen 1 bis 4, die ein silikatisches Substrat, das mit Metalloxid beschichtet sein kann, enthalten.

6. Verfahren zur Herstellung der Glanzpigmente gemäß den Ansprüchen 1 bis 5, dadurch gekennzeichnet, daß man Bismutvanadat in Gegenwart der zu belegenden Substratteilchen, einer Base und gegebenenfalls gelöster Phosphate, Borate und/oder hydrolysierbarer Metallsalze mit einer alkalischen Vanadatlösung aus einer sauren Bismutsalzlösung ausfällt und die so erhaltenen belegten Substratteilchen abfiltriert, wäscht und trocknet.

7. Verfahren nach Anspruch 6, dadurch gekennzeichnet, daß man die alkalische Vanadatlösung zu der sauren Bismutsalzlösung, in der die Substratteilchen suspendiert sind, gibt, mit einer Base den pH-Wert der Mischung auf 2 bis 6 einstellt, ungefähr eine Stunde bei diesem pH-Wert rührt, den pH-Wert dann auf 5 bis 8 erhöht, unter Konstanthaltung des pH-Wertes auf Rückflußtemperatur erhitzt, anschließend 0,5 bis 5 Stunden weiter erhitzt und das Pigment isoliert.

8. Verfahren nach Anspruch 6, dadurch gekennzeichnet, daß man die saure Bismutsalzlösung, in der die Substratteilchen suspendiert sind, zu der alkalischen Vanadatlösung gibt, mit einer Base den pH-Wert der Mischung auf 3 bis 6,5 einstellt, den pH-Wert durch weitere Zugabe von Base während des Erhitzens auf bis zu 100°C konstant hält, bis er nicht mehr absinkt, und nach 0,5 bis 5 h das Pigment isoliert und 0,5 bis 5 Stunden bei 300 bis 600°C tempert.

9. Verfahren nach den Ansprüchen 6 bis 8, dadurch gekennzeichnet, daß man die mit einer bismutvanadathaltigen Schicht belegten Substratteilchen in wäßriger Suspension durch Hydrolyse eines Metallsalzes mit einer äußeren metalloxid- oder metalloxidhydrathaltigen Schicht oder durch Auffällen eines Metallsilikates oder Metallphosphates mit einer äußeren metallsilikat- oder metallphosphathaltigen Schicht belegt und das Pigment in üblicher Weise isoliert.

10. Verwendung der Glanzpigmente gemäß den Ansprüchen 1 bis 5 zur Einfärbung von Lacken, Druckfarben, Kunststoffen, Gläsern, keramischen Produkten und Zubereitungen der dekorativen Kosmetik.

## Claims

1. Luster pigments comprising coated platelet-shaped substrates wherein the coating comprises a layer comprising bismuth vanadate.

2. Luster pigments as claimed in claim 1 wherein the bismuth vanadate layer further comprises phosphate, borate, sulfate, silicate and/or metal oxide or metal oxide hydrate.

3. Luster pigments as claimed in claim 1 or 2 wherein the bismuth vanadate layer further comprises oxide or oxide hydrate of an alkali earth metal, silicon and/or titanium.

4. Luster pigments as claimed in any of claims 1 to 3 wherein the outer layer is an essentially colorless layer comprising metal oxide, metal silicate and/or metal phosphate.

5. Luster pigments as claimed in any of claims 1 to 4 wherein the substrate is a silicate with or without a coating of metal oxide.

6. A process for preparing the luster pigments of any of claims 1 to 5, which comprises using an alkaline vanadate solution to precipitate bismuth vanadate from an acidic bismuth salt solution in the presence of the substrate particles to be coated and of a base and in the presence or absence of dissolved phosphates, borates and/or hydrolyzable metal salts, filtering off the coated substrate particles thus obtained and washing and drying them.

7. A process as claimed in claim 6, wherein the alkaline vanadate solution is added to the acidic bismuth salt solution in which the substrate particles are suspended, the mixture is adjusted with a base to pH 2-6, stirred at that pH for about one hour, then adjusted again to pH 5-8, heated at constant pH to the reflux temperature, and then further heated for 0.5-5 hours, and the pigment is isolated.

8. A process as claimed in claim 6, wherein the acidic bismuth salt solution in which the substrate particles are suspended is added to the alkaline vanadate solution, the mixture is adjusted with a base to pH 3-6.5, the pH is kept constant with further base during the heating to 100°C until the pH does not decrease again, and after 0.5-5 h the pigment is isolated and heat-treated at 300-600° for 0.5-5 hours.

9. A process as claimed in any of claims 6 to 8, wherein the substrate particles coated with a bismuth vanadate layer are further coated in aqueous suspension with an outer layer of metal oxide or metal oxide hydrate by hydrolysis of a metal salt or with an outer layer of metal silicate or metal phosphate by precipitation of a metal silicate or metal phosphate and the pigment is isolated in a conventional manner.

10. The use of the luster pigments of any of claims 1 to 5 for coloring paints, printing inks, plastics, glasses, ceramic products and decorative cosmetic preparations.

## Revendications

1. Pigments brillants à base de substrats en forme de plaquettes ou lamelles, revêtus, qui comportent une couche contenant du vanadate de bismuth.

2. Pigments brillants suivant la revendication 1, dans lesquels la couche contenant du vanadate de bismuth comprend du phosphate, du borate, du sulfate, du silicate et/ou un oxyde de métal ou un oxyde de métal hydraté.

3. Pigments brillants suivant la revendication 1 ou 2, dans lesquels la couche contenant du vanadate de bismuth comprend un oxyde ou un oxyde hydraté de métal alcalino-terreux, de silicium et/ou de titane.

4. Pigments brillants suivant les revendications 1 à 3 qui contiennent, à titre de couche externe, une couche essentiellement incolore, contenant un oxyde de métal, un silicate de métal et/ou un phosphate de métal.

5. Pigments brillants suivant les revendications 1 à 4, qui contiennent un substrat silicaté qui peut être revêtu d'un oxyde de métal.

6. Procédé de fabrication des pigments brillants suivant l'une quelconque des revendications 1 à 5, caractérisé en ce que l'on précipite du vanadate de bismuth en présence des particules de substrat à revêtir d'une base et éventuellement de sels de métaux hydrolysables, de borates et/ou de phosphates dissous avec une solution alcaline de vanadate à partir d'une solution d'un sel de bismuth acide et on sépare par filtration les particules de substrat revêtues obtenues, on les lave et on les sèche.

7. Procédé suivant la revendication 6, caractérisé en ce que l'on ajoute la solution de vanadate alcaline à la solution de sel de bismuth acide dans laquelle sont suspendues les particules de substrat, on règle le pH du mélange à une valeur qui varie de 2 à 6 à l'aide d'une base, on agite le tout à cette valeur de pH pendant environ 1 heure, on remonte ensuite le pH à une valeur qui varie de 5 à 8, on porte le mélange à la température de reflux en maintenant la valeur du pH constante, puis on poursuit le chauffage pendant 0,5 à 5 heures et on isole le pigment.

8. Procédé suivant la revendication 6, caractérisé en ce que l'on ajoute la solution de sel de bismuth acide dans laquelle sont suspendues les particules du substrat à une solution de vanadate alcaline, on règle le pH du mélange à 3-6,5 à l'aide d'une base, on maintient constante la valeur du pH par l'addition poursuivie de base au cours du chauffage jusqu'à 100°C, jusqu'à ce que cette valeur de pH ne diminue plus et on isole le pigment après 0,5 à 5 h et on le soumet à un traitement thermique à 300-600°C pendant 0,5 à 5 heures.

9. Procédé suivant les revendications 6 à 8, caractérisé en ce que l'on revêt les particules de substrat revêtues d'une couche contenant du vanadate de bismuth en suspension aqueuse par l'hydrolyse d'un sel de métal avec une couche externe contenant un oxyde de métal ou un oxyde hydraté de métal, ou par la précipitation d'un silicate de métal ou d'un phosphate de métal avec une couche externe de silicate de métal ou de phosphate de métal et on isole le pigment de la manière habituelle.

10. Utilisation des pigments brillants suivant l'une quelconque des revendications 1 à 5 pour la coloration ou la teinture de laques, d'encres d'impression, de matières plastiques, de verres, de produits céramiques et de préparations de la cosmétique décorative.
